Europäisches Patentamt

European Patent Office

Office européen des brevets

(11) Publication number: **0 407 858 A1**

# EUROPEAN PATENT APPLICATION

(21) Application number: **90112653.2**

(22) Date of filing: **03.07.90**

(51) Int. Cl.⁵: **C08K 5/10, C08L 101/00, C08L 27/06**, //(C08L27/06,71:02)

(30) Priority: **14.07.89 US 380931**

(43) Date of publication of application:
**16.01.91 Bulletin 91/03**

(84) Designated Contracting States:
**AT BE CH DE DK ES FR GB GR IT LI LU NL SE**

(71) Applicant: **THE B.F. GOODRICH COMPANY**
**3925 Embassy Parkway**
**Akron Ohio 44313-1799(US)**

(72) Inventor: **Mertzel, Elaine Audrey**
**22272 Riverwalk Road**
**Rocky River, Ohio 44116(US)**
Inventor: **Sullivan, Francis Ryan**
**1401 Lynn Park Drive**
**Cleveland Heights, Ohio 44121(US)**

(74) Representative: **von Kreisler, Alek,**
**Dipl.-Chem. et al**
**Patentanwälte Von Kreisler-Selting-Werner,**
**Deichmannhaus am Hauptbahnhof**
**D-5000 Köln 1(DE)**

(54) **Polymer composition having improved durability and method relating thereto.**

(57) The present invention relates to polymer compositions having improved durability. More specifically, the composition and method of this invention is directed to the use of an olefin additive, particularly an acrylate, to substantially reduce delamination and premature aging in polymer materials comprising substantially immiscible polymer components.

EP 0 407 858 A1

# POLYMER COMPOSITION HAVING IMPROVED DURABILITY AND METHOD RELATING THERETO

## BACKGROUND OF THE INVENTION

### Field Of The Invention

The present invention relates generally to polymer compositions having improved durability. More specifically, the composition and method of this invention is directed to the use of an olefin additive to substantially reduce delamination and premature aging in polymeric materials.

### Discussion Of The Prior Art

Polymer delamination as used herein can be described generally as the separation and peeling away of the outer surface portion of a polymer material. Such delamination is generally promoted if the physical properties of the polymer material are not uniform throughout, particularly where the region near the surface of the material is substantially different (on a molecular level) from the interior region of the material.

Non-uniformity within a polymer material can occur for a variety of reasons. Even where the plastic consists of a homopolymer, the material may not be homogeneous on a molecular level, because the size and molecular weight of each polymer molecule can often vary dramatically and the various sized polymer molecules may not be uniformly distributed throughout the material. Also, oftentimes polymerization is not 100% efficient, and therefore relatively tiny monomers, solvent molecules or the like may be present in the material.

Many plastics are manufactured by blending more than one type of polymer together. Such blending generally involves the mixing of dissimilar polymers, and dissimilar polymers generally resist intermixing and tend to separate from one another.

During processing, a polymer material is typically heated to a liquid or semi-liquid state, and the surface of the polymeric material is typically subjected to higher shear forces than the remaining bulk of the material. Furthermore, smaller molecules will often migrate away from the larger molecules, depending upon processing times and conditions, such as shear rate, temperature and the like. Moreover, the temperature of the surface of the polymer material may differ from the temperature of the interior region of the polymer material, and this can sometimes cause side reactions to occur or occur more quickly at the surface than at regions below the surface. As a result, the morphology and composition at the surface of a plastic can be significantly different than that of the interior of the plastic.

Depending upon ambient conditions and the like, in some cases where the surface region has different morphology or composition from the internal region, the surface region will tend to peel away or delaminate, particularly over time and most particularly where there are continuous and severe variations in ambient conditions. If the surface portion expands and contracts with ambient conditions ( i . e . temperature, humidity, etc.) in a manner different from the interior portion, delamination is generally promoted.

Delamination can also occur due to the presence of a conventional lubricant, plasticizer, softening agent or the like. Such additives are generally used to aid processing but can be detrimental to the structural integrity of the plastic. Such additives can cause or contribute to a peeling away at the surface of the plastic.

After a polymer material has been manufactured and put in use, sometimes undesirable reactions occur over time. These reactions are often initiated or accelerated due to ambient conditions, particularly sunlight (UV radiation), extreme temperature, airborne radicals (such as ozone), humidity and the like. Such unwanted reactions are often the cause of poor weathering or aging of the polymer material.

## OBJECTS OF THE INVENTION

It is therefore an object of the present invention to provide a relatively inexpensive, easy to manufacture polymer composition which is resistant to delamination, premature aging, and the like.

Other objects and features of the present invention will become apparent to one of ordinary skill in the art upon further reading of this specification and accompanying claims.

## SUMMARY OF THE INVENTION

The present invention is directed to a polymer composition resistant to delamination and premature aging, comprising:
a first component comprising a polymer having a GPC weight average molecular weight relative to polystyrene greater than about 10,000;

a second component comprising a polymer having a GPC weight average molecular weight relative to polystyrene greater than about 10,000 wherein the second component is different from the first component and wherein the second component is not miscible on a molecular level with the first component; and
a third component comprising an olefin having a functionality of 1 to 4;
wherein the weight ratio of the first, second and third components, respectively, is in the range of about 0.1-99.8: 0.1-99.8: 0.1-75.

## DETAILED DESCRIPTION OF THE PREFERRED EMBODIMENT

### 1. The First Component

The preferred embodiment of the present invention is directed generally to blends comprising a first component which can be any polymer, but preferably comprises a grafted or ungrafted polyolefinic, a vinylic or styrenic polymer or a mixture thereof. Preferred polyolefins include high density polyethylene, low density polyethylene, very low density polyethylene, linear low density polyethylene, polypropylene, polybutylene, polybutene, polycycloolefin, ethylene-propylene terpolymer and the like, and mixtures thereof. Preferred styrenic polymers include polystyrene, high impact polystyrene (HIPS), styrene methyl methacrylate (SMMA), acrylonitrile-butadiene-styrene (ABS), styrene-acrylonitrile (SAN), styrene-maleic anhydride (SMA), and polycarbonate.

Preferred vinyl polymers include: 1. acrylates, such as those substantially derived from acrylate or methylacrylate type monomers, such as methyl methacrylate, ethyl acrylate, propyl acrylate, butyl acrylate, 2-ethylhexyl acrylate, acrylic acid and acrylic monomers that contain hydroxyl, epoxy or haloalkyl moieties; 2. polyvinyl chloride (PVC); 3. chlorinated polyvinyl chloride (CPVC); and 4. polyvinyl acetate. The preferred polyolefin is polyethylene. The preferred styrenic polymer is ABS, and the preferred vinylic polymer is PVC. The preferred GPC weight average molecular weight relative to polystyrene for the first component is greater than 10,000.

Nothing has been discovered which would suggest that other polymers could not also be used as the first component of this invention. For a particular application or performance requirement, certain polymers might work better than others. However, this would have to be determined using ordinary skill and experimentation after reading this specification and accompanying claims. Due to the wide variety of possible applications of this invention, it would be impossible to list each and every possible embodiment.

### 2. The Second Component

The preferred embodiment further comprises a second component. This second component is hereby defined as any polymer which is not miscible on a molecular level with the first component. That is, in viewing the molecular structure of the first component mixed or blended with the second component, certain regions will have first component molecules lumped together and other regions will have second component molecules lumped together.

Polymer immiscibility is difficult to define, and there is not a standard unit of measure commonly accepted in the industry to define the level of miscibility between polymeric materials. An excellent article discussing polymer miscibility can be found in "Polymer Blends", vol 1. authored by S. Krause and edited by D. Paul and S. Newman, Academic Press, New York, New York (1979) pp. 15-20.

In general, polymers miscible on a molecular scale exibit no heterogeneity under considerable magnification in a phase contrast microscope or an electron microscope. Typically such polymers exhibit only one glass transition temperature. However, without highly sophisticated analytical instrumentation, it is often difficult to measure whether a second glass transition temperatures indeed exists, and such difficulties are discussed in the Krause article identified above.

Miscibility is generally estimated by looking at the glass transition temperatures of each polymer material separately and then looking at the glass transition temperature or temperatures for the mixture of the two polymeric materials. If the glass transition temperature of the first component is not the same as the glass transition temperature of the second component and if the resulting mixture has only one glass transition temperature, then it is very likely that the mixture is miscible on a molecular level. Conversely if the mixture exhibits to some degree two glass transition temperatures, then the two components are very likely not substantiallymiscible on a molecular level.

The preferred second Component is an oxirane copolymer which is the polymer product of the following comonomers:
   i) ethylene oxide in the range from about 5% to about 95% by weight; and
   ii) at least one heterocyclic comonomer in the range of from about 95% to about 5% by weight, whereby the cyclic comonomer comprises a ring comprising an oxygen atom and at least 2 carbon atoms, wherein the ring is either free of pendant groups or comprises a pendant group which is further defined as a substituted or unsubstituted, saturated, unsaturated or partially saturated: a) aliphatic, particularly alkyls and haloalkyls; b) cycloaliphatic; c) aromatic; or d) combinations thereof.

The preferred ethylene oxide copolymer comprises ethylene oxide and epihalohydrin or propylene oxide. The most preferred ethylene oxide copolymer comprises ethylene oxide and epichlorohydrin in a weight ratio of about 80: 20. The preferred GPC weight average molecular weight for the second component is greater than about 10,000 relative to polystyrene.

Nothing has been discovered which would suggest that other substantially immiscible polymers could not also be used as the second component of this invention. For a particular application or performance requirement, certain polymers might work better than others. However, this would have to be determined using ordinary skill and experimentation after reading this specification and accompanying claims. Due to the wide variety of possible applications of this invention, it would be impossible to list each and every possible embodiment.

Depending upon the composition of the first component, the second component could possibly be a polyolefinic, a vinylic or styrenic polymer or a mixture thereof. Polyolefins include high density polyethylene, low density polyethylene, very low density polyethylene, linear low density polyethylene, polypropylene, polybutylene, polybutene, polycycloolefin, ethylene-propylene terpolymer and the like, and mixtures thereof. Styrenic polymers include polystyrene, high impact polystyrene (HIPS), styrene methyl methacrylate (SMMA), acrylonitrile-butadiene-styrene (ABS), styrene-acrylonitrile (SAN), styrene-maleic anhydride (SMA), and polycarbonate.

Vinyl polymers include: 1. those substantially derived from acrylate or methylacrylate monomers, such as methyl methacrylate, ethyl acrylate, propyl acrylate, butyl acrylate, 2-ethylhexyl acrylate, acrylic acid and acrylic monomers that contain hydroxyl, epoxy or halogen moieties; 2. polyvinyl chloride (PVC); 3. chlorinated polyvinyl chloride (CPVC); and 4. polyvinyl acetate.

## 3. The Third Component

The third component of the preferred embodiment of the present invention is an olefin, preferably having an olefinic functionality of 1 or more.

The most preferred third component is an acrylate. Acrylates having multiple double bonds (functionality) are well known in the art. Such acrylates can be prepared by reacting a polyolefinic alcohol with acrylic acid. Suitable acrylates by way of example include N-alkoxymethylated products of alpha, beta-monoethylenically unsaturated carboxylic acid amides such as N-methoxymethyl acrylate, N-methoxymethyl metharylamide, N-ethoxymethyl acrylamide, N-ethoxymethyl methacrylamide, N-n-propoxymethyl acrylamide, N-n-propoxymethyl methacrylamide, N-isopropoxymethyl acrylamide, N-isopropoxymethyl methacrylamide, N-n-butoxymethyl acrylamide, N-n-butoxymethyl methacrylamide, N-sec-butoxymethyl acrylamide, N-sec-butoxymethyl methacrylamide, N-t-butoxymethyl acrylamide, N-t-butoxymethyl methacrylamide, N-isobutoxymethyl acrylamide and N-isobutoxymethyl methacrylamide, and N-methylolated products thereof, trimethylolpropane triacrylate, for example, 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 2-hydroxybutyl acrylate, 2-hydroxybutyl methacrylate, 3-hydroxybutyl acrylate, 3-hydroxybutyl methacrylate, 4-hydroxybutyl acrylate, 4-hydroxybutyl methacrylate, 5-hydroxypentyl acrylate, 5-hydroxypentyl methacrylate, 6-hydroxyhexyl acrylate, 6-hydroxyhexyl methacrylate, neopentyl glycol monoacrylate, neopentylglycol monomethacrylate, 3-butoxy--2-hydroxypropyl acrylate, 3-butoxy-2-hydroxypropyl methacrylate, 2-hydroxy-1-phenylethyl acrylate, 2-hydroxy-1-phenylethyl methacrylate, polypropylene glycol monoacrylate, propylene glycol monomethacrylate, glycerin monoacrylate, glycerin monomethacrylate, ethyl acrylate, ethyl methacrylate, n-propyl acrylate, p-propyl methacrylate, isopropyl acrylate, isopropyl methacrylate, n-butyl acrylate, n-butyl methacrylate, sec-butyl acrylate, sec-butyl methacrylate, t-butyl acrylate, t-butyl methacrylate, isobutyl acrylate, isobutyl methacrylate, n-hexyl acrylate, n-hexyl methacrylate, 2-ethylhexyl acrylate, 2-ethylhexyl methacrylate, n-octyl acrylate, n-octyl methacrylate, lauryl acrylate, lauryl methacrylate, tridecyl acrylate, tridecyl methacrylate, stearyl acrylate, stearyl methacrylate, N-N'-dimethylaminoethyl acrylate, N,N'-dimethylaminoethyl methacrylate, glycidyl acrylate, glycidyl methacrylate, cyclohexyl acrylate, cyclohexyl methacrylate, phenyl methacrylate, benzyl methacrylate, and the like.

Typical examples of difunctional acrylates are: ethylene glycol diacrylate; diethylene glycol diacrylate; tetramethylene glycol diacrylate; polyethylene glycol diacrylate; 1,3-butylene glycol diacrylate; 1,4-butanediol diacrylate; dimethylene glycol diacrylate; 1,6-hexanediol diacrylate; 2,2-dimethylpropane-1,3-diacrylate; tripropylene glycol diacrylate; ethoxylated bis-phenol-A-diacrylate; zinc diacrylate; and their dimethacrylate homologues.

Typical trifunctional acrylates are: trimethylolpropane triacrylate; ethoxylated trimethylolpropane triacrylate; and pentaerythritol triacrylate.

Typical polyfunctional acrylates are: pentaerythritol tetraacrylate; dipentaerythritol monohydroxy pentaacrylate. Glycidyl methacrylate, glycidyl acrylate and 2-(1-aziridinyl) methacrylate are suitable as polyfunctional acrylates in the presence of chemical species which polymerize the three-membered rings: The most preferred third component is trimethyol propane triacrylate.


4. The Mixture Or Blend

The most preferred first component is PVC. The most preferred second component is ethylene oxide/epichlorohydrin (EO/ECH) copolymer having a preferred weight ratio of about 4:1, and the most preferred third component is trimethylol propane triacrylate. The preferred weight ratio of the first, second and third components respectively is about 0.1-99.9: 0.1-99.8: 0.1-75. More preferably, this range is about 50-95: 15-50: 0.1-10, and most preferably, this range is about 60-80: 10-25: 1-5.

The three components can be blended together all at once, or two of the three components can be premixed in a two step blending process. Preferably, the blending is accomplished at a temperature less than about 230°C, most preferably less than about 200°C using conventional compounding equipment and technique.

Various conventional additives can be added to the polymer blend of this invention, either as part of the one step blending process or in either step of the two step process. Such additives can be added in amounts up to about 20% by weight of the final product. Conventional stabilizers, lubricants, antioxidants, antiozonants, fillers, fibers, impact modifiers and the like can be used in typical amounts. Useful compounding additives and reinforcement agents are well known in the art, and appropriate additives and amounts can be determined using ordinary experimentation.

Plasticizers are particularly useful additives, and preferred plasticizers include pthalates, adipates, phosphates, citrates, chlorinated polyethylene, trimellitates, and the like. The amount of plasticizer is preferably about 0 to about 150 pph (parts per hundred resin),most preferably about 0.5 to about 100 pph.

It has been surprisingly discovered that the third component of the preferred embodiment improves dispersion, and substantially eliminates delamination and aging of the mixture.

It is theorized that the third component may act as an effective radical or acid scavenger. Such radicals or acids can be generated by exposure to ambient conditions ( i . e ., temperature, sunlight or UV radiation, humidity, ozone, air pollutants and the like), and these radicals or acid moities will then cause side reactions which will ultimately result in the aging or weathering of the material. The third component is surprisingly effective and does not deleteriously effect the characteristics of the material.

Those skilled in the art will readily recognize and perhaps make changes to the above invention. It is to be understood that an equivalent of changes and modifications of the embodiments described above are also contemplated by the present invention.


Claims

1. A polymer composition resistant to delamination and premature aging, said composition comprising: a first component comprising a polymer having a GPC weight average molecular weight greater than about 10,000 relative to polystyrene; a second component comprising a polymer having a GPC weight average molecular weight greater than about 10,000 relative to polystyrene wherein the second component is different from the first component and wherein the second component is not substantially miscible on a molecular level with the first component; and a third component comprising an olefin having a functionality of 1 or more; wherein the weight ratio of the first, second and third components, respectively, is about 0.1-99.8: 0.1-99.8: 0.1-75.

2. The polymer composition of Claim 1 wherein the third component is an acrylate having an olefinic functionality of 1 to 4.

3. The polymer composition of Claim 2 wherein the second component comprises a ethylene oxide homopolymer or copolymer.

4. The polymer composition of Claim 3 wherein the first component is PVC, CPVC, ABS, a grafted or ungrafted polyolefin or mixtures thereof.

5. The polymer composition of Claim 4 wherein the weight ratio of the first, second and third component, respectively, is about 50-95: 15-50: 0.1-10.

6. A method of manufacturing a polymer composition resistant to delamination and premature aging, said method comprising:

blending the following components together: a first component comprising a polymer having a GPC weight average molecular weight greater than about 10,000;

a second component comprising a polymer having a GPC weight average molecular weight greater than about 10,000 wherein the second component is different from the first component and wherein the second component is not substantially miscible on a molecular level with the first component; and

a third component comprising an olefin having a functionality of 1 or more;

wherein the weight ratio of the first, second and third components, respectively, is about 0.1-99.8: 0.1-99.8: 0.1-75.

7. The method of Claim 6 wherein the third component is an acrylate having an olefinic functionality of 1 to 4.

8. The method of Claim 7 wherein the second component comprises a ethylene oxide homopolymer or copolymer.

9. The method of Claim 8 wherein the first component is PVC, CPVC, ABS, a grafted or ungrafted polyolefin or mixtures thereof.

10. The method of Claim 9 wherein the weight ratio of the first, second and third component, respectively, is about 50-95: 15-50: 0.1-10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 262 649 (UNION CARBIDE CORP.) * Page 4, lines 34-51; page 5, lines 3-18; page 19, line 1 - page 20, line 20 * | 1,2,6,7 | C 08 K 5/10<br>C 08 L 101/00<br>C 08 L 27/06 //<br>(C 08 L 27/06<br>C 08 L 71:02 ) |
| Y | | 3,4,5,8,9,10 | |
| Y | JOURNAL OF POLYMER SCIENCE, PART B: POLYMER PHYSICS, vol. 26, pages 1595-1612; A.G. MARGARITIS et al.: "Compatibility of poly(vinyl chloride) with polyalkyleneoxides. I. Poly(methylene oxide) and poly(ethylene oxide)" * Whole document * | 3,4,5,8,9,10 | |
| A | EP-A-0 282 985 (THE B.F. GOODRICH CO.) | | |
| A | DE-A-1 907 024 (SHINETSU CHEMICAL CO.) * Page 3, lines 3-20 * | | |
| A | US-A-4 112 022 (MARIEN et al.) | | TECHNICAL FIELDS SEARCHED (Int. Cl.5) |
| A | GB-A-1 098 714 (AMERICAN CYANAMIDE CO.) * Column 1, line 38 - column 2, line 49; column 2, lines 59-63 * | | C 08 K<br>C 08 L |

The present search report has been drawn up for all claims

| Place of search | Date of completion of the search | Examiner |
|---|---|---|
| THE HAGUE | 04-10-1990 | MAZET J.-F. |